# EUROPEAN PATENT APPLICATION

(11) **EP 3 943 513 A1**
(43) Date of publication of application: **26.01.2022**
(21) Application number: 20794489.3
(22) Date of filing: 24.04.2020
(51) Int. Cl.: C08B 37/10

(54) **METHOD FOR OBTAINING LOW-MOLECULAR-WEIGHT HEPARINS BY MEANS OF TANGENTIAL FLOW FILTRATION**

(30) Priority: 26.04.2019 ES 201930373; 23.01.2020 CN 202010078241
(71) Applicant: Laboratorios Farmacéuticos Rovi, S.A., 28037 Madrid (ES)
(72) Inventor: FRANCO RODRÍGUEZ, Guillermo, 28037 Madrid (ES); GUTIERRO ADURIZ, Ibon, 28037 Madrid (ES)
(74) Representative: Elzaburu S.L.P.
(86) International application number: PCT/ES2020/070263
(87) International publication number: WO 2020/216981

(57) **Abstract**

Method for obtaining low molecular weight heparins (LMWH) with a molecular weight distribution between 3.0 and 5.0 kDa comprising at least one concentration step by tangential flow filtration (TFF). The method is particularly useful for the preparation of bemiparin and enoxaparin without the use of fractional precipitation nor the use of alcoholic solutions. In particular, the preparation of LMWH is obtained by depolymerization of heparin and filtration (TFF ultrafiltration and/or diafiltration) of the depolymerized heparin without the use of fractional precipitation and without an alcoholic solution.

## Description

### DESCRIPTION OF THE TECHNIQUE

The present invention relates to a method for obtaining low molecular weight heparins with a specific molecular weight distribution, comprising at least one concentration step by tangential flow filtration. Apart from the tangential flow filtration concentration, the method may encompass other steps such as diafiltration or hydrogen peroxide treatment. Thus, the invention may be included in the field of pharmaceutical technology.

### Background of the Invention

Heparin is a polysaccharide of the glycosaminoglycan family, formed by uronic acid (L-iduronic acid or D-glucuronic acid) and D-glucosamine, linked alternately. L-iduronic acid may be 2-*O-*sulfated and D-glucosamine may be *N*-sulfated and/or 6-*O*-sulfated, and to a lesser extent N-acetylated or 3-*O*-sulfated. Heparin is preferably used as a sodium salt, but can also be used as a salt of other alkali or alkaline earth metals and is mainly used as an antithrombotic and anticoagulant medicament.

Heparins can be classified according to their molecular weight into, unfractionated heparin (UFH), low molecular weight heparin (LMWH), and very low molecular weight heparin (VLMWH). LMWH and VLMWH are obtained from the depolymerization of the original UFH molecule.

In any case, for UFH as well as for the various LMWH or VLMWH obtained by the known depolymerization methods (enzymatic, nitrous acid, β-elimination, etc.), the current purification processes are performed by selective precipitation of their oligosaccharide chains with alcohols (mainly methanol and ethanol) and to a lesser extent with other solvents such as acetone. Taking into account that several volumes of alcohol are used with respect to the volume of the aqueous solution contained in the product of interest and that, moreover, several purifications are generally necessary, from an industrial point of view this purification strategy poses a problem in terms of the volume of alcoholic waste generated in relation to its management, storage and recycling.

Thus, from a waste management point of view, other purification alternatives where the use of alcohol is not necessary are more interesting. Dialyzing the aqueous solution containing the product of interest against a membrane of the appropriate pore size is an alternative, but it has the drawback of dialyzing against large amounts of water and it is also difficult to scale optimized laboratory scale processes to an industrial scale.

In view of the prior art, there are numerous methods of obtaining enoxaparin sodium, albeit much more complex than that of the present invention or with the presence of alcoholic solvents.

Thus, patent document CN103342761 discloses a method for preparing enoxaparin sodium, which includes two serial ultrafiltrations by membranes of 8 kDa and 2 kDa respectively, with the aim of eliminating degradation products and impurities of low molecular weight and controlling the molecular weight and molecular weight distribution of the product in the presence of alcoholic solvents. Once the purified product is obtained, it is lyophilized to obtain enoxaparin sodium. In this case, lyophilization is used to remove solvents and moisture that may have remained housed in the structure of enoxaparin sodium obtained from the process of this patent.

Patent document CN102050888 also discloses a final purification process of enoxaparin sodium in the presence of alcoholic solvents with a 1 kDa membrane concentration step and subsequent lyophilization wherein the molecular weight and molecular weight distribution of the product is further controlled. As in the previous patent, lyophilization is used to remove solvents and moisture that may have remained housed in the structure of enoxaparin sodium obtained from the process of this patent.

Other processes for preparation and/or purification of polysaccharides are disclosed in the prior art: ES2161615A1 by Laboratories Farmacéuticos ROVI, S.A., US2009105194A1 by Flengsrud, US5767269 by Hirsh, WO2010/111710A1 by Solazyme, Inc., US2007/0154492A1 by Michon, Griffin et al. ("Isolation and characterization of heparan sulfate from crude porcine intestinal mucosal peptidoglycan heparin" Carbohyd. Res. (1995), 276, 183-197), and US5110918 by Casu. These processes require the fractional precipitation of depolymerized heparin.

Given the closest prior art, it is noteworthy that all previous documents suffer from the drawback of using alcohols at one stage or another of the process, which is currently undesirable due to a greater concern for the environment. In some documents,buffered media with salts are used in one of the tangential filtration steps. However, the control of molecular weights by the pore size employed and the parameters indicated by prior art documents is not specific and does not allow defining a specific structural profile of the enoxaparin sodium obtained. Accordingly, it would be desirable to provide a simplified and efficient procedure for obtaining LMWH, eliminating the use of alcohols, which would also allow control over the profile of the product obtained in such a way that it can be implemented continuously.

### Summary of the Invention

As an alternative, the present invention makes use of tangential flow filtration (TFF) using non-alcoholic diafiltration buffers, which represents a significant advantage with respect to the methods described in the prior art, as it minimizes the residual solvent contents in the product formed and therefore the purity profile with respect to same. Further, the method designed herein provides a method that can be performed continuously as it allows profiling of the obtained product without the need for structural adjustments. This means that compared to production methods that involve purification by fractional precipitates, the production time is minimized, with the resulting improvement in cost reduction and increased production capacity. In some embodiments of the process of the invention, the crude depolymerized heparin is the product of a heparin depolymerization process. In some embodiments, the process of the invention excludes the use fractional precipitation of depolymerized heparin, in particular excluding the use of fractional precipitation of depolymerized heparin produced by heparin depolymerization. In addition, the invention considers embodiments wherein the low molecular weight heparin is prepared in two main steps: a) depolymerization of heparin to form crude depolymerized heparin; and b) purification of crude depolymerized heparin by TFF (concentration and/or diafiltration using membranes as described below) and without the use of fractional precipitation.

In some embodiments, the depolymerized heparin is enoxaparin sodium or bemiparin sodium, preferably enoxaparin sodium.

In some embodiments of the process of the invention, the crude enoxaparin sodium (or bemiparin sodium) is the product of a heparin depolymerization process. In some embodiments, the process of the invention excludes the use fractional precipitation of enoxaparin sodium (or bemiparin sodium), in particular excluding the use of fractional precipitation of enoxaparin sodium (or bemiparin sodium) produced by heparin depolymerization. In addition, the invention considers embodiments wherein the enoxaparin sodium (or bemiparin sodium) is prepared in two main steps: a) depolymerization of heparin to form crude enoxaparin sodium (or bemiparin sodium) without fractional precipitation; and b) purification of crude enoxaparin sodium (or bemiparin sodium) by TFF (concentration and/or diafiltration using membranes as described below) and without the use of fractional precipitation.

In some embodiments, the molecular weight (Mw) of the enoxaparin falls within the following ranges:

| Sample | Mw, Da | M1 <2000 Da, % | M2 2000-8000 Da, % | M3 >8000 Da, % |
|---|---|---|---|---|
| Raw enoxaparin sodium | 3000-5000 | ≤25 | 60-80 | ≤20 |
| Enoxaparin sodium produced (new process) | 3800-5000 | 12.0-20.0 | 68.0-82.0 | ≤18.0 |

In some embodiments, the molecular weight (Mw) of the bemiparin falls within the following ranges:

| Sample | Mw, Da | M1 <2000 Da, % | M2 2000-6000 Da, % | M3 >6000 Da, % |
|---|---|---|---|---|
| Raw bemiparin sodium | 2500-5000 | <40 | 50-75 | <25 |
| Bemiparin sodium produced (new process) | 3000-4200 | <35.0 | 50.0-75.0 | <15.0 |

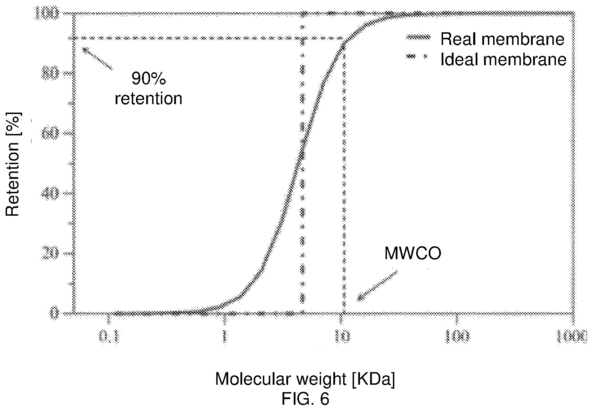

To control the parameters that allow the implementation of the method employed in the present invention, certain filtration membranes with a specific pore size are selected that allow their use on products in a wide range of molecular weights. Available membranes generally range from 1 kDa to 1000 kDa (or ≤ 1 kDa) nominal cut-off. The nominal molecular weight cut-off (NMWCO) is defined as the minimum molecular weight of a solute that is 90% retained by the membrane, and is determined evaluating the membrane retention of components with different molecular weight (Figure 6).

In LMWH such as bemiparin sodium or enoxaparin sodium, with average molecular weights of 3600 and 4400 Da, respectively, the range of available membranes is therefore limited to those with nominal cut-off approximately ≤1 kDa, as higher pore sizes would result in loss of the lowest molecular weight oligosaccharide chains.

The inventors of the present invention have developed a method that allows obtaining LMWH, and in particular enoxaparin sodium and bemiparin sodium, by concentration by TFF without the need to use alcohols or other organic solvents, nor mediums buffered with salts, obtaining a product with an improved purity than those described in prior documents, with suitable quality attributes, according to the parameters described in the monograph for this product of the European Pharmacopoeia (latest edition) and the United States Pharmacopoeia (latest edition). In addition, the product has an average molecular weight profile and an oligosaccharide chain distribution suitable for its possible pharmacological applications.

In a first aspect, the present invention relates to a method for obtaining low molecular weight heparins (LMWH) with an average molecular weight distribution of between approximately 3.0 and approximately 5.0 kDa, comprising the following steps:
a) providing a depolymerized heparin solution with an oligosaccharide chain distribution range of between approximately 0.6 and approximately 10 kDa and a heparin concentration of up to approximately 4% w/v;
b) performing a concentration step by aqueous phase tangential flow filtration (TFF) using an approximately 1 kDa nominal cut-off membrane to achieve a heparin concentration of up to approximately 25% w/v.

Preferably, the solution of step a) is an aqueous solution.

The heparin concentration in step a) is preferably from between approximately 3% and approximately 4% w/v, more preferably from between approximately 3.5% and approximately 4% w/v, and even more preferably approximately 4% w/v.

Preferably, the membrane used for the concentration by tangential flow filtration has a nominal cut-off of approximately 0.7 to approximately 1 kDa; and more preferably of approximately 0.9 to approximately 1 kDa. In a specific embodiment, it has a nominal cut-off of approximately 1 kDa.

Tangential flow filtration (TFF), as well as the remaining steps of the method of the invention (clarification, depth filtration, diafiltration, treatment with H₂O₂), can be performed in aqueous phase without alcohol or any other organic solvents.

Step b) can include performing at least one concentration step by aqueous phase tangential flow filtration (TFF) using an approximately ≤1 kDa nominal cut-off membrane, e.g. 1, 2 or 3, until achieving a maximum heparin concentration of up to approximately 25% w/v.

In step b) the heparin concentration obtained can be at least 5% w/v, preferably at least 8% w/v. Preferably, in step b) a heparin concentration of at least 10% w/v is obtained, preferably between approximately 10% and approximately 25% w/v; more preferably between approximately 10% and approximately 22% w/v; even more preferably between approximately 10% approximately 20%. In a specific embodiment, in step b) a heparin concentration is obtained of between approximately 10% and approximately 22% w/v.

In one embodiment, in step b) a single concentration step by TFF is performed. In a specific embodiment, in step b) a single concentration step by TFF is performed until obtaining a heparin concentration of at least 10% w/v, preferably between approximately 10% and approximately 22% w/v, more preferably between approximately 12% and approximately 22% w/v.

According to another embodiment of the invention, in step b) a single concentration step by TFF is performed until obtaining a heparin concentration of at least 5% w/v, preferably at least 10% w/v, more preferably between approximately 5% and approximately 15% w/v or between approximately 10% and approximately 22% w/v.

In an additional embodiment, the process of the invention comprises:
a) providing a depolymerized heparin solution with an oligosaccharide chain distribution range of between 0.6 and 10 kDa and a heparin concentration of between approximately 3% and approximately 4% w/v, preferably 4% w/v;
b) performing a single concentration step by aqueous phase tangential flow filtration (TFF) using a ≤1 kDa nominal cut-off membrane to achieve a heparin concentration of up to 25% w/v, preferably between approximately 12% and approximately 22% w/v;

In another embodiment, step b) comprises two concentration steps by TFF.

In a preferred embodiment, in step (b) a first concentration is performed by TFF to achieve a heparin concentration of between approximately 4% and approximately 10% w/v, preferably between approximately 5% and approximately 10% w/v, and a second concentration step by TFF to achieve a heparin concentration of between approximately 10% and approximately 25% w/v. In a more preferred embodiment, the second concentration step achieves a heparin concentration of between approximately 12% and approximately 25% w/v, and more preferably of between approximately 12% and approximately 22% w/v.

In another preferred embodiment a concentration by TFF is performed in a single step from approximately 4% w/v to approximately 12-22% w/v (or approximately 10-25% w/v).

The process of the invention can include one or several additional steps, such as clarification, depth filtration, diafiltration with water, treatment with hydrogen peroxide or lyophilization.

In another preferred embodiment, at least one step of clarifying the heparin solution of step (a) is performed.

In another preferred embodiment, at least one depth filtration step is performed that may be prior to or subsequent to any of the TFF concentration steps. For example, before or after the TFF concentration step (if only one such step is performed) or before or after the first TFF concentration step if step b) comprises more than one such step.

In another preferred embodiment, at least one diafiltration step is performed with water that may be prior to or subsequent to any of the TFF concentration steps. For example, before or after the TFF concentration step, or before or after the first TFF concentration step if step b) comprises more than one such step.

In a preferred embodiment a treatment step with H₂O₂ is performed that can be prior to the TFF concentration step or prior to any of the concentration steps if step b) comprises more than one TFF concentration steps. For example, if step b) comprises two TFF concentration steps, a treatment step with H₂O₂ can be performed prior to the first concentration step or prior to the second concentration step.

In another preferred embodiment, at least one diafiltration step with water is performed that can be prior to the TFF concentration step or to the first TFF concentration step (if step b) comprises more than one TFF concentration step) or prior to the aforementioned treatment step with H₂O2.

In another preferred embodiment, a step of lyophilizing the concentrate obtained in step (b) is performed.

In the present invention, "LMWH" is understood to mean heparins with an average molecular weight of less than approximately 8000 Da. Bearing in mind that one of the objectives of the method of the invention is to remove impurities associated with the manufacturing process, which are generally of low molecular weight (< 500 Da), the membranes available for use are limited since ideally they present a cut-off lower than the average molecular weight of the LMWH so as to allow the removal of low molecular weight impurities without loss of oligosaccharide chains. Preferably, the nominal cut-off of the membranes employed is ≤1 kDa, although this may vary depending on the molecular weights to be obtained.

As one skilled in the art is aware, among the various steps of concentration by TFF preferably the maintenance steps that may be required for cleaning and/or regenerating the membranes are carried out using water, NaOH or any other product according to the specifications thereof. The specification describes one or more embodiments incorporating features of this invention. The scope of the present invention is not limited only to the embodiments described in it. The invention includes all combinations and subcombinations of the various aspects and embodiments disclosed in this document. These and other aspects of the invention will be made evident with reference to the following detailed description, claims and accompanying drawings.

### Brief Description of the Drawings

The accompanying drawings, which are appended herein and form part of the specification, illustrate one or more embodiments of the present invention and, together with the description, also contribute to the explanation of the principles of the present invention and to allow a person skilled in the art to reproduce and use the invention. The following drawings are provided for illustration purposes only and in no way limit the full scope of the present invention.

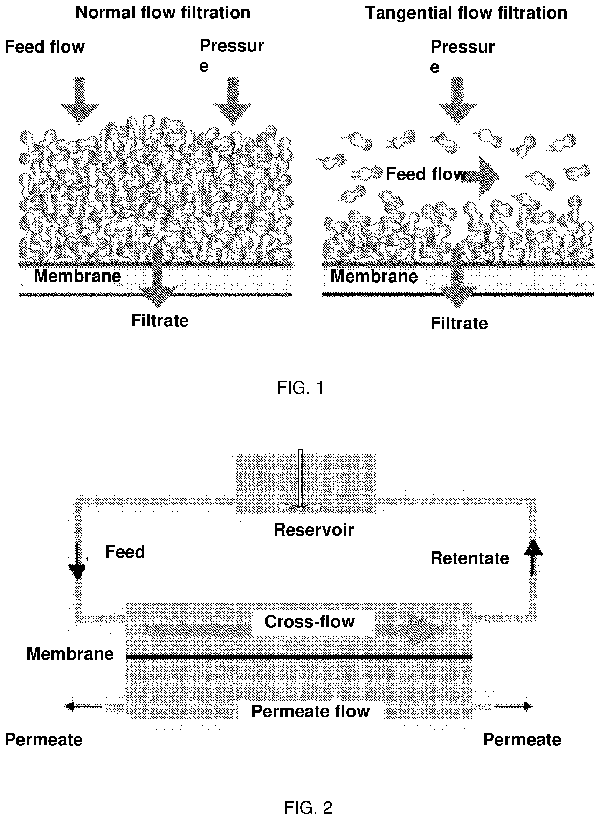

**Figure 1****:** Comparative schematic for normal flow filtration and tangential flow filtration.
**Figure 2****:** General schematic of the tangential filtration process.
**Figure 3****:** Comparison of concentration and diafiltration processes.

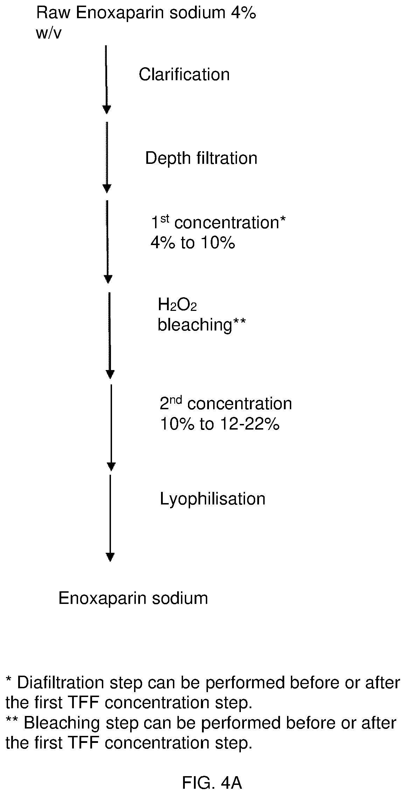

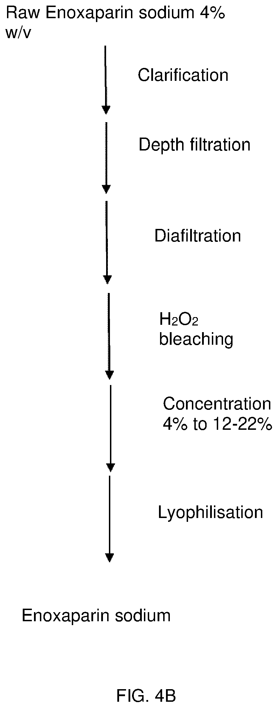

**Figures 4A** **and** **4B****:** Schematics of the purification process according to the invention.
**Figures 5A-5D****:** Comprise various graphs representing the variation in both average molecular weight (FIG. 5A) and distribution of molecular weights (FIG. 5B: <2000 kDa; FIG. 5C: >8000kDa; FIG. 5D: 2000-8000 kDa) is linear in the second concentration from 10% to 20% of nominal concentration of the product in the retentate.
**Figure 6****:** Nominal cut-off: definition.

### Description of the Invention

In the present invention "tangential flow filtration" or "TFF" is understood as the filtration technique in which the solution to be filtered passes tangentially over the surface of the filter, such that the pressure difference that is generated allows components that are smaller than the pore size to pass through same (permeate). Larger components are retained over the filter surface and returned to the feed tank (retentate).

In the present invention "clarification" is understood as the filtration performed to eliminate particles in suspension present in the solution, such as filtration performed by filters from 1-60 microns, preferably from 1-25 microns.

In the present invention, "depth filtration" is understood to mean filtration in which a multi-step labyrinth filter medium is used, which helps retain the particles. The larger particles will be retained on the surface and the finer ones follow their path towards the inside of the filter medium being trapped in the inner layers, so that the turbidity of the dissolution is reduced. In a specific embodiment, this is a filtration performed with filters of 1-5 microns, preferably of 2-4 microns. The filtration can be performed with water or buffered solution.

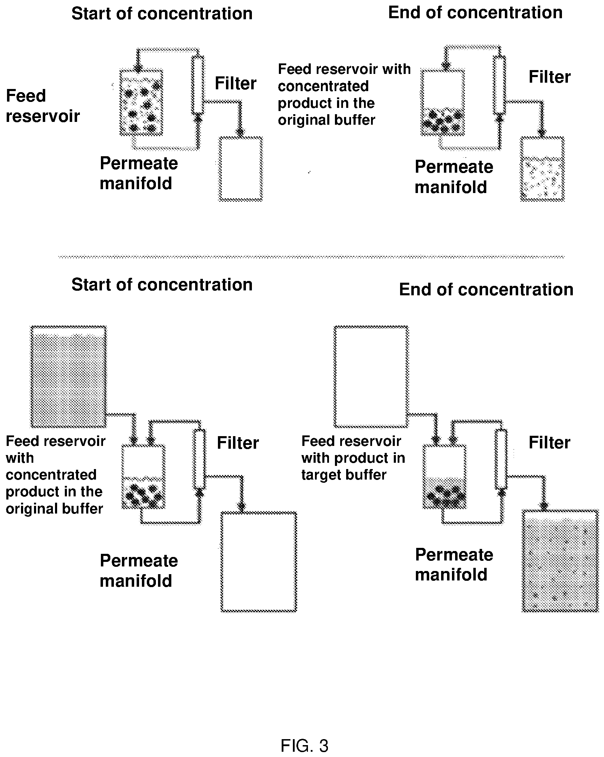

In the present invention, "concentration" is understood as the tangential filtration step in which the retained product increases its concentration in the solution by removing permeate (see Figure 3).

In the present invention, "diafiltration" is understood as the tangential filtration step in which, while the permeate is removed, the solution is fed with the same buffer solution of water flow rate, so that the concentration of the retentate in the solution is not modified (see Figure 3). In this case, a membrane such as that used in concentration by TFF can be used; that is, a membrane with a nominal cut-off of approximately ≤1 kDa , preferably approximately 0.7 to approximately 1 kDa, more preferably approximately 0.9 to approximately 1kDa, and even more preferably approximately 1kDa.

In one embodiment, the heparin (after depolymerization) is a sodium salt of heparin, e.g. enoxaparin sodium or bemiparin sodium.

Crude enoxaparin sodium can be obtained by alkali (e.g. NaOH) depolymerization of the benzyl ester of heparin obtained from pig intestinal mucosa.

In one specific embodiment, the product obtained after depolymerization of enoxaparin sodium corresponds to a solution which, in addition to containing raw enoxaparin sodium, contains impurities corresponding to the saponification in alkaline medium of the benzyl ester of heparin, in addition to salts corresponding to the pH adjustments made during the breaking process. According to one embodiment of the invention, the TFF process is carried out on this raw enoxaparin sodium solution, so that the concentration of this solution is carried out with the aim, on the one hand, of eliminating low molecular weight impurities, and on the other, of reaching the appropriate concentration to carry out the bleaching treatment with hydrogen peroxide. Alternatively, bleaching treatment with H₂O₂ could be performed prior to the step of concentration by TFF. These steps can be performed without the use of fractional precipitation of the crude product (crude depolymerized heparin).

Alternatively, bleaching treatment with H₂O₂ could be performed prior to the step of concentration by TFF.

Additionally, a diafiltration process (optional) can be carried out for a thorough removal of low molecular weight impurities, before or after the concentration step. At the end of this step, optionally a second concentration is performed in order to remove the generated saline impurities and adjust the content in low molecular weight oligosaccharide chains, for which the average molecular weight of the solution is monitored; once the optimal value is reached, it is lyophilized to obtain enoxaparin sodium of the appropriate purity.

Therefore, in one specific embodiment the process of the invention comprises:
a) providing a depolymerized heparin solution with an oligosaccharide chain distribution range of between 0.6 and 10 kDa and an enoxaparin sodium concentration of approximately 4% w/v;
b) carrying out a concentration step by TFF in aqueous phase using a membrane with nominal cut-off ≤1 kDa until obtaining a heparin concentration of up to approximately 25% w/v, of up to approximately1 0% w/v, or preferably between approximately 5% and approximately 10% w/v;
c) optionally, performing a diafiltration step with water (e.g. Non-buffered water) before or after step b),
d) performing a treatment step with H₂O₂ before or after step b),
e) optionally, performing a single concentration step by aqueous phase TFF using a ≤1 kDa nominal cut-off membrane to achieve a heparin concentration of up to 25% w/v, preferably between approximately 12% and approximately 25% w/v; and
f) performing a lyophilization step on the product obtained.

In a specific embodiment, the process of the invention comprises:
a) providing a depolymerized enoxaparin sodium solution with an oligosaccharide chain distribution range of between approximately 0.6 and approximately 10 kDa and an enoxaparin sodium concentration of up to 4% w/v;
b) carrying out a concentration step by TFF in aqueous phase using a membrane with nominal cut-off ≤1 kDa until obtaining a heparin concentration of up to approximately 25% w/v, of up to approximately 10% w/v, or preferably between approximately 5% and approximately 10% w/v;
c) performing a treatment step with H₂O₂ on the product obtained in step b),
d) performing a single concentration step by aqueous phase TFF using a ≤1 kDa nominal cut-off membrane to achieve a heparin concentration of up to 25% w/v, preferably between approximately 12% and approximately 25% w/v; and
e) performing a lyophilization step on the product obtained.

Preferably, the process of this invention includes a clarification and/or depth filtration step before step b).

In a specific embodiment, the process of the invention comprises:
a) providing a depolymerized enoxaparin sodium solution with an oligosaccharide chain distribution range of between approximately 0.6 and approximately 10 kDa and an enoxaparin sodium concentration of up to 4% w/v;
b) carrying out a concentration stage by TFF in aqueous phase using a membrane with nominal cut-off ≤1 kDa until obtaining a heparin concentration of up to approximately 25% w/v, of up to approximately 10% w/v, or preferably between approximately 5% and approximately 10% w/v;
c) performing a diafiltration step with water on the product obtained in step b),
d) performing a treatment step with H₂O₂ on the product obtained in step c),
e) optionally, performing a depth filtration step on the product obtained in step d),
f) performing a single concentration step by aqueous phase TFF using a ≤1 kDa nominal cut-off membrane to achieve a heparin concentration of up to 25% w/v, preferably between approximately 12% and approximately 25% w/v; and
g) performing a lyophilization step on the product obtained.

Preferably, the process of this invention includes a clarification and/or depth filtration step before step b).

In a specific embodiment, the process of the invention comprises:
a) a) providing a depolymerized enoxaparin sodium solution with an oligosaccharide chain distribution range of between 0.6 and 10 kDa and an enoxaparin sodium concentration of up to 4% w/v;
b) performing a single concentration step by aqueous phase TFF using a ≤1 kDa nominal cut-off membrane to achieve a heparin concentration of up to 25% w/v, preferably between approximately 5% and approximately 10% w/v;
c) performing a depth filtration step on the product obtained in step b),
d) performing a treatment step with H₂O₂ on the product obtained in step c),
e) performing a single concentration step by aqueous phase TFF using a ≤1 kDa nominal cut-off membrane to achieve a heparin concentration of up to 25% w/v, preferably between approximately 12% and approximately 25% w/v; and
f) performing a lyophilization step on the product obtained.

Preferably, the process of this invention includes a clarification and/or depth filtration step before step b).

In a specific embodiment, the process of the invention comprises:
a) providing a depolymerized enoxaparin sodium solution with an oligosaccharide chain distribution range of between 0.6 and 10 kDa and an enoxaparin sodium concentration of up to 4% w/v;
b) performing a diafiltration step with water on the solution of step a),
c) performing a treatment step with H₂O₂ on the product obtained in step c),
d) performing a single concentration step by aqueous phase TFF using a ≤1 kDa nominal cut-off membrane to achieve a heparin concentration of up to approximately 25% w/v, preferably between approximately 5% and approximately 20% w/v; and
e) performing a lyophilization step on the product obtained.

Preferably, the process of this invention includes a clarification and/or depth filtration step before step b).

### Examples of the Invention

The following specific examples provided below serve to illustrate the nature of the present invention. These examples are included for illustrative purposes only and are not to be construed as limitations to the invention claimed herein. Crude enoxaparin sodium and bemiparin sodium were prepared by depolymerization of heparin without performing fractional precipitation.

The process is described below for obtaining crude enoxaparin sodium, the starting product used in described examples 1, 2, 3, 4 and 5. Dissolve 10 g of heparin sodium in purified water and under stirring add benzethonium chloride solution, forming benzethonium heparinate. Wash the formed product several times with water to remove excess chlorides and finally the dry the product by lyophilization. Dissolve the benzethonium heparinate in methylene chloride and adjust the temperature. Add benzyl chloride and allow to react. The product obtained is heparin benzyl ester. Dissolve the heparin benzyl ester in water and add sodium hydroxide. At the end of the reaction, neutralize the solution; the product obtained is crude enoxaparin sodium. After obtaining the crude enoxaparin sodium, the examples described below were performed.

### Example 1

The method of the invention was performed with the following main steps:
a) first concentration by TFF to obtain a product with a heparin concentration of 4% to 10% w/v;
b) diafiltration and treatment with H₂O₂;
c) second concentration by TFF to obtain a final product with a heparin concentration of 10% to 20% w/v.

Initially, crude enoxaparin sodium with a product concentration of 40 g/L and an oligosaccharide chain distribution between 0.6 and 10 kDa was used as the starting product. This initial product was prefiltered with a 3.0 µm Clarigard^{®} filter. The product of the heparin depolymerization process is crude enoxaparin sodium.

Next, the first concentration step was carried out by TFF, intended to increase the concentration of enoxaparin to a value between 4% and 10%, as well as to reduce the concentration of contaminants (mainly salts with a molecular weight < 0.5 kDa and other small products resulting from previous manufacturing processes). To do this, a Millipore^{®} regenerated cellulose membrane with a nominal cut-off of ≤1 kDa was used. The concentration step was started with about 2005 g of product with a transmembrane pressure (TMP) of 3.25 bar prior to passing the permeate flow to a separate container, the system was kept in total recirculation for about 15 minutes.

During concentration, permeate flow ranged from 9 initial to 4.8 final LMH (L/m²/h) (53% of initial flow), for an average flow of 6.2 LMH. 2 x permeate samples were collected, one in VCF (volume concentration factor) = 1.26X (P1) and the other of the permeate volume at the end of concentration (P2). A sample of the volume of material retained at the end of concentration (R1), as well as a sample of the initial feed, was also taken after prefiltration by the 3.0 µm filter (B1). The main data of the concentration study are presented in Table 1.

| Table 1: LMWH Concentration Study (4 → 10%) | | | | | | | |
|---|---|---|---|---|---|---|---|
| Initial volume **(L)** | Extractable volume (L) | **VCF** (X) | Mean permeate flow (LMWH) | T **(ºC)** | Time (min) | **ΔPressure** (bar) | Flow rate Tangential (LMM) |
| 2.005 | 1.2 | 2.49 | 6.2 | 23.6 →25.7 | 106 | 0.5 → 0.7 | 5.3 |

Subsequently, a diafiltration step was carried out using purified water, intended to clarify the resulting product. During diafiltration, permeate flow continuously decreased from an initial 8.4 to a final 2.4 LMH (approx. 29%), for an average flow of 5.03 LMH. 3 x permeate samples were collected, each at the end of each diavolume (D1, D2 and D3 respectively) and one from the volume of material retained at the end of diafiltration (D5). The conditions under which the diafiltration study was carried out can be seen in Table 2:

| Table 2: LMWH diafiltration study | | | | | | | |
|---|---|---|---|---|---|---|---|
| **Initial volume (L)** | **Extractable volume (L)** | **Diafiltration volumes (N)** | **Mean permeate flow (LMWH)** | **T (ºC)** | **Time (min)** | **ΔPressure (bar)** | **Flow rate Tangential (LMM)** |
| 0.798 | 2.3 | 3 | 5.03 | 26.5 →27.8 | 390 | 0.3 → 0.8 | 5.3 |

The approximately 0.8 L of product obtained after diafiltration was subsequently subjected to chemical reaction with H₂O₂.

Before continuing with the second concentration step by TFF, an additional (optional) clarification step was carried out, again using a 3.0 µm Clarigard^{®} filter, to remove any particles that may have decanted at the bottom of the vessel.

Next, a second concentration step was carried out by TFF, this time aimed at achieving a concentration of enoxaparin of between 10% and 20% w/v, also using a Millipore^{®} regenerated cellulose membrane of ≤1 kDa nominal cut-off.

During concentration, permeate flow ranged from 3 initial to 0.75 final LMH (25%), for an average flow of 1.5 LMH. 2 x permeate samples were collected, one in VCF = 1.34X (P3) and the other in the permeate volume at the end of concentration (P4). A sample was also taken of the volume of material retained after concentration (R2), after depolarizing the membrane by leaving the system running at a low TMP (1.2 bar) for 10 minutes.

Table 3 below shows the molecular weights of the samples taken during the process described above, analyzed according to the method established by the European Pharmacopoeia (EP).

| Table 3: Molecular weights of samples obtained at different stages of the process | | | | |
|---|---|---|---|---|
| **Sample** | **Mw, Da** | **<2000 Da, %** | **2000-8000 Da, %** | **>8000 Da, %** |
| Raw enoxaparin sodium | 3737 | 23.8 | 71.1 | 8.1 |
| B1 (Clarigard^{®} clarification) | 3723 | 24.0 | 71.1 | 5.0 |
| P1 (1st permeate sample, 1 st concentration) | < 600 | --- | --- | --- |
| P2 (2nd permeate sample, 1 st concentration) | < 600 | --- | --- | --- |
| R1 (retentate after first concentration) | 3645 | 25.2 | 69.9 | 4.8 |
| D1 (permeate after first diavolume) | 1196 | 96.5 | 3.5 | 0.0 |
| D2 (permeate after second diavolume) | 1491 | 84.5 | 15.5 | 0.0 |
| D3 (permeate after third diavolume) | 1646 | 78.1 | 21.9 | 7.0 |
| D5 (retentate after completion of diafiltration) | 4158 | 14.6 | 78.4 | 7.0 |
| P3 (1st permeate sample, 2nd concentration) | 1866 | 67.3 | 32.7 | 0.0 |
| P4 (2nd permeate sample, 2nd concentration) | 1991 | 60.3 | 39.7 | 0.0 |
| R2 (retentate after second concentration) | 4444 | 8.1 | 84.0 | 7.9 |

As shown in the percentages of the MW fractions of the target product (less than 2000 Da, 2000 to 8000 Da and more than 8000 Da) in the table above, it appears that the first concentration step does not negatively affect the product profile (there is no loss of any fraction in the permeate as seen in samples P1 and P2).

For samples taken during diafiltration, D1, D2, D3 and D5 indicate that:
- basically there is no loss of the highest MW fraction in the permeate, along the diafiltration;
- there is some loss of the smallest and average MW fractions in the permeate, where the highest loss is always relative to the lowest fraction;
- the rate of loss of the smallest and medium fractions decreases, respectively, along the diafiltration;
- in general, there is some reduction and enrichment along the diafiltration of smaller fractions and medium-high fractions respectively (according to the ≤1 kDa membrane cut-off).

The numbers for the instantaneous permeate samples P3, P4 and sample R2 at the end of the second concentration step indicate that:
- basically there is no loss of the highest MW fraction in the permeate, throughout this step;
- there is some loss of the smallest and medium MW fractions in the permeate, where the highest loss is always relative to the smallest fraction (as in diafiltration);
- the rate of loss of the medium fraction increases in this second concentration step (as in diafiltration).

### Example 2

The method of the invention was performed with the following main steps:
a) First concentration by TFF to obtain a product with a heparin concentration from 4% to 10% w/v;
b) H₂O₂ treatment;
c) Second concentration by TFF to obtain a final product with a heparin concentration from 10% to 20% w/v.

Approximately 1936 g of starting product was transferred to the tank and the system was operated in total recirculation at a TMP = 3.2 bar for 10 minutes at a cross-flow of 5.1 LMM.

During concentration, permeate flow ranged from an initial 9.6 to a final 4.2 LMH (44%), for an average flow of 6 LMH. A sample of instantaneous permeate was collected at VCF = 1.43X (P5), another permeate sample after completion of the concentration (P6) and finally a sample of the retentate (R3) at the end of the concentration, after leaving the filter in total recirculation at TMP = 0.6 bar for 10' (membrane depolarization). A sample of the starting solution (B2) was also taken before transfer to the tank.

Approximately 794 g of product was transferred to the tank after being treated with H₂O₂ and proceeded to the second concentration step.

During concentration, permeate flow ranged from 5.7 initial to 0.9 final LMH (16.0%), for an average flow of 2.5 LMH. 1 x instantaneous permeate sample was collected at VCF = 1.33X (P7) and another of the permeate volume at the end of concentration (P8). A sample of the retentate volume at the end of concentration (R4) was also collected, after depolarizing the membrane by leaving the system running at a low TMP (0.8 bar) for 10 minutes.

| Table 4: Molecular weights in the process steps | | | | |
|---|---|---|---|---|
| **Sample** | **Mw, Da** | **<2000 Da, %** | **2000-8000 Da, %** | **>8000 Da, %** |
| Raw enoxaparin sodium | 3646 | 24.9 | 70.6 | 4.5 |
| B2 (Clarigard^{®} clarification) | 3742 | 23.5 | 71.5 | 4.9 |
| P5 (1st permeate sample, 1st concentration) | < 600 | --- | --- | --- |
| P6 (2nd permeate sample, 1st concentration) | < 600 | --- | --- | --- |
| R3 (retentate after first concentration) | 3784 | 23.1 | 71.5 | 5.4 |
| P7 (1st permeate sample, 2nd concentration) | 1311 | 90.8 | 9.2 | 0.0 |
| P8 (2nd permeate sample, 2nd concentration) | 1476 | 84.4 | 15.6 | 0.0 |
| R4 (retentate after second concentration) | 4308 | 13.0 | 79.2 | 7.8 |

Table 4 shows the molecular weights of the samples taken during the process described above, analysed according to the method established by the European Pharmacopoeia (EP). As the numbers in the table above show, it appears that the first concentration step does not negatively affect the product profile (without loss of any fraction in the permeate, samples P5 and P6, as in samples P1 and P2).

The numbers relating to permeate samples P7, P8 and the retentate volume sample R4 at the end of the second concentration step indicate that:
- there is no loss of the highest fraction of MW in the permeate, throughout said step;
- there is some loss of the smallest and medium MW fractions in the permeate, the highest loss is always relative to the smallest fraction (as in the first diafiltration test);
- the rate of loss of the medium fraction increases in the second concentration (as in the diafiltration process).

Finally, the retentate solution is lyophilized to obtain dry enoxaparin sodium.

### Example 3

The method of the invention was performed with the following main steps:
a) First concentration by TFF to obtain a product with a heparin concentration from 4% to 10% w/v;
b) Depth filtration;
c) H₂O₂ treatment;
d) Second concentration by TFF to obtain a final product with a heparin concentration from 10% to 20% w/v.

Approximately 2000 g of starting product (turbidity > 1000 NTU) was transferred to the tank and the system was operated in full recirculation at a TMP = 3.2 bar for 15 minutes at a cross-flow of 5.2 LMM.

During concentration, permeate flow ranged from an initial 9.6 to a final 3.9 LMH (41% of initial flow), for an average flow of 5.8 LMH. A permeate sample was collected at VCF = 1.43X (P1') and another at the end of concentration (P2') as well as the retentate (R1') at the end of concentration after leaving the filter in total recirculation at TMP = 0.7 bar for 15' (membrane depolarization). A sample of the initial feed (B1') was also taken prior to transfer to the tank. The R1' solution was passed through a Millistak +^{®} HC Pro C0SP depth filter, reducing turbidity to 0.57 NTU, to be subsequently treated with H₂O₂. Approximately 0.8 litres of product were transferred to the tank after being treated with H₂O₂ and the second concentration step was performed.

This second concentration was performed by sequentially aliquoting both the retentate and the permeate from the initial nominal concentration of 10% (samples R'3 and P'3, respectively) to the final nominal concentration of 20% (samples R'12 and P'12, respectively), passing through the intermediate concentrations of 11, 12, 13, 14, 15, 16, 17, 18 and 19%.

Table 5 below shows the molecular weights of the samples taken during the process described above, analyzed according to the method established by the European Pharmacopoeia (EP).

| Table 5: Molecular weights in the process steps | | | | |
|---|---|---|---|---|
| **Sample** | **Mw, Da** | **<2000 Da, %** | **2000-8000 Da, %** | **>8000 Da, %** |
| B1' (Clarigard^{®} clarification) | 3464 | 29.6 | 65.95 | 4.50 |
| P1' (1 st permeate sample, 1st conc.) | < 600 | --- | --- | --- |
| P2' (2nd permeate sample, 1st conc.) | < 600 | --- | --- | --- |
| R1 '(retentate after first concentration) | 3416 | 31.90 | 63.37 | 4.70 |
| P3' (1st permeate sample 11%, 2nd conc.) | 1054 | 100.00 | 0.00 | 0.00 |
| P4' (1st permeate sample 12%, 2nd conc.) | 945 | 99.20 | 0.77 | 0.00 |
| P5' (1st permeate sample 13%, 2nd conc.) | 999 | 98.40 | 1.59 | 0.00 |
| P6' (1st permeate sample 14%, 2nd conc.) | 1060 | 96.90 | 3.10 | 0.00 |
| P7' (1st permeate sample 15%, 2nd conc.) | 1139 | 94.20 | 5.76 | 0.00 |
| P8' (1st permeate sample 16%, 2nd conc.) | 1197 | 92.20 | 7.82 | 0.00 |
| P9' (1st permeate sample 17%, 2nd conc.) | 1255 | 90.00 | 10.04 | 0.00 |
| P10' (1st permeate sample 18%, 2nd conc.) | 1288 | 88.70 | 11.29 | 0.00 |
| P11' (1st permeate sample 19%, 2nd conc.) | 1378 | 85.40 | 14.63 | 0.00 |
| P12' (1st permeate sample 20%, 2nd conc.) | 1330 | 87.20 | 12.84 | 0.00 |
| R3' (1st retentate sample 11%, 2nd conc.) | 3744 | 24.6 | 69.9 | 5.6 |
| R4' (1st retentate sample 12%, 2nd conc.) | 3757 | 24.3 | 70.0 | 5.7 |
| R5' (1st retentate sample 13%, 2nd conc.) | 3795 | 23.5 | 70.8 | 5.8 |
| R6' (1st retentate sample 14%, 2nd conc.) | 3827 | 22.6 | 71.6 | 5.9 |
| R7' (1st retentate sample 15%, 2nd conc.) | 3881 | 21.5 | 72.4 | 6.1 |
| R8' (1st retentate sample 16%, 2nd conc.) | 3937 | 20.2 | 73.5 | 6.3 |
| R9' (1st retentate sample 17%, 2nd conc.) | 3994 | 18.9 | 74.7 | 6.4 |
| R10' (1st retentate sample 18%, 2nd conc.) | 4005 | 18.4 | 75.1 | 6.4 |
| R11' (1st retentate sample 19%, 2nd conc.) | 4079 | 16.7 | 76.6 | 6.7 |
| R12' (1st retentate sample 20%, 2nd conc.) | 4116 | 15.9 | 77.3 | 6.8 |

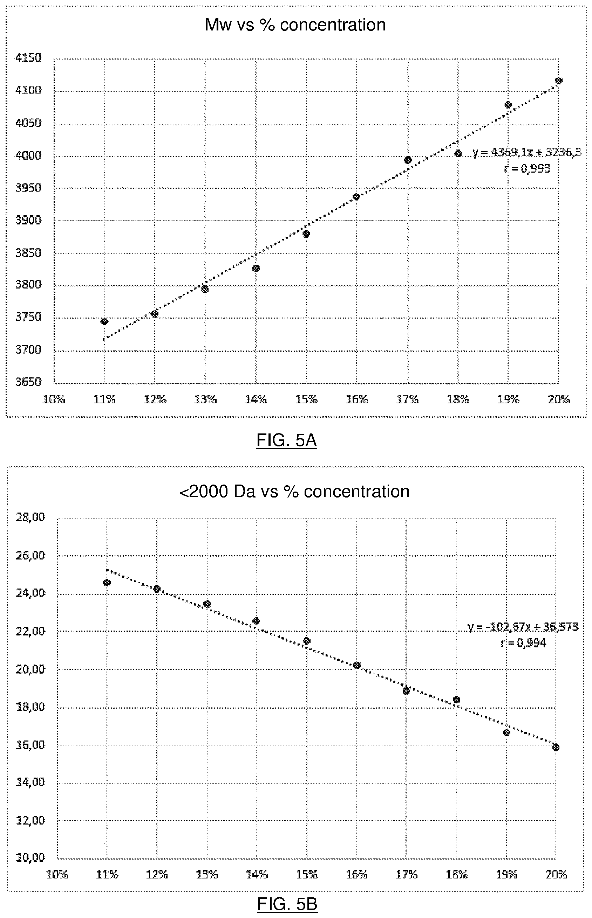

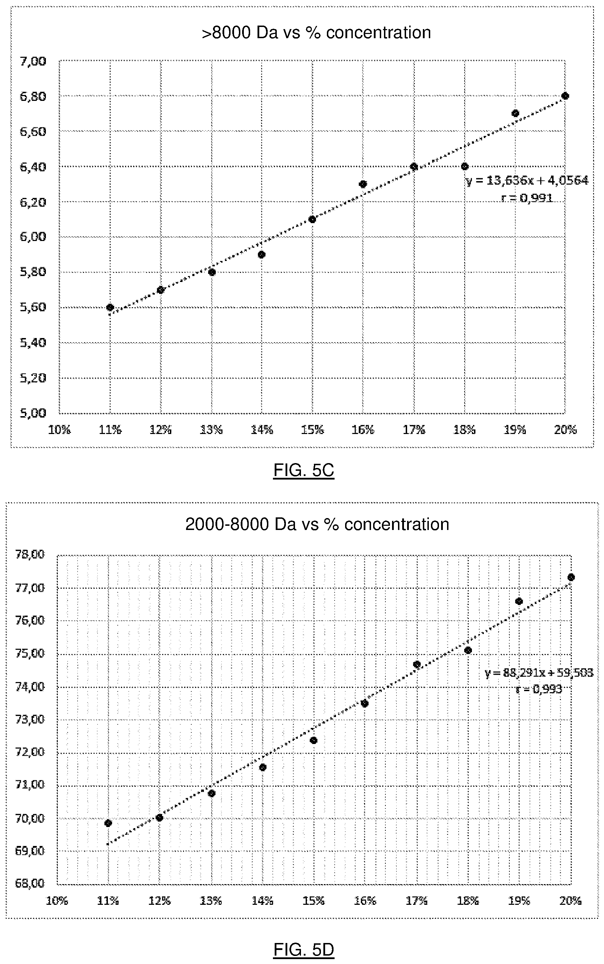

The variation both in average molecular weight and in the distribution of molecular weights is linear during the 2nd concentration from 10% to 20% nominal concentration of the product in the retentate, so that, by adjusting the final value of the concentration of the product in the solution of the retentate, it is possible to define a certain molecular weight profile and distribution of oligosaccharide chains for obtaining enoxaparin sodium. This fact can be seen in Figure 5. Finally, the retentate solution is lyophilized to obtain dry enoxaparin sodium.

### Example 4

The product obtained in the previous example was analysed to determine its anti-FXa and anti-Flla activity. The results obtained were as follows:

| **Anti-FXa activity, IU/mg (dried substance)** | **Anti-Flla activity, IU/ mg (dried substance)** | **Ratio aFXa/a FIIa** |
|---|---|---|
| 112 | 29.5 | 3.8 |

This quality attribute adequately fulfils the ranges defined by both European Pharmacopoeia and US Pharmacopoeia for enoxaparin sodium:
- Anti-FXa activity: 90 - 125 IU/mg (dried substance)
- Anti-Flla activity: 20.0 - 35.0 IU/mg (dried substance)
- Ratio aFXa/aFlla: 3.3 - 5.3

### Example 5

The method of the invention was performed with the following main steps:
a) Diafiltration;
b) H₂O₂ treatment; and
c) Concentration by TFF to obtain a final product with a heparin concentration from 4% to 15% w/v.

Approximately 3010 g of starting product was transferred to the tank and the system was operated in total recirculation at a TMP = 4.9 bar for 15 minutes at a cross-flow of 2.0 LMM.

During diafiltration, permeate flow ranged from an initial 17.7 to a final 13.1 LMH, for an average flow of 12.6 LMH and for 6 diavolumes. After each diafiltered volume samples were collected of both the permeate (DP1 to DP6) and the retentate (DR1 to DR6). The permeate was treated with H₂O₂ and approximately 2720 g of treated product were transferred to the tank.

During concentration, permeate flow ranged from 12.7 initial to 1.28 final LMH (89.9% reduction), for an average flow of 5.1 LMH. Concentration was performed from 4 to 15%, collecting both a permeate sample (CP1 to CP6) and a retentate sample (CR1 to CR6) from 10%. 1 x instantaneous permeate sample was collected at VCF = 1.33X (P7) and another of the permeate volume at the end of concentration (P8). A sample of the retentate volume at the end of concentration (R4) was also collected, after depolarizing the membrane by leaving the system running at a low TMP (0.8 bar) for 10 minutes.

Table 6 below shows the molecular weights of the samples taken during the process described above, analyzed according to the method established by the European Pharmacopoeia (EP).

| Table 6: Molecular weights in the process steps | | | | |
|---|---|---|---|---|
| **Sample** | **MW, Da** | **<2000 Da, %** | **2000-8000 Da, %** | **>8000 Da, %** |
| DR1 (retentate 1 diavolume) | 3703 | 27.40 | 66.42 | 6.20 |
| DR2 (retentate 2 diavolumes) | 3770 | 26.10 | 67.51 | 6.40 |
| DR3 (retentate 3 diavolumes) | 3807 | 25.00 | 68.51 | 6.50 |
| DR4 (retentate 4 diavolumes) | 3841 | 24.10 | 69.36 | 6.50 |
| DR5 (retentate 5 diavolumes) | 3856 | 23.50 | 69.93 | 6.50 |
| DR6 (retentate 6 diavolumes) | 3884 | 22.90 | 70.40 | 6.70 |
| CR1 (retentate concentration 10%) | 3889 | 22.20 | 71.24 | 6.60 |
| CR2 (retentate concentration 11%) | 3912 | 21.60 | 71.77 | 6.60 |
| CR3 (retentate concentration 12%) | 3954 | 20.70 | 72.54 | 6.80 |
| CR4 (retentate concentration 13%) | 3967 | 20.10 | 73.08 | 6.80 |
| CR5 (retentate concentration 14%) | 3995 | 19.30 | 73.78 | 6.90 |
| CR6 (retentate concentration 15%) | 4029 | 18.50 | 74.54 | 7.00 |

The variation both in average molecular weight and in the distribution of molecular weights is linear from 10% to 15% nominal concentration of the product in the retentate, so that, by adjusting the final value of the concentration of the product in the solution of the retentate, it is possible to define a certain molecular weight profile and distribution of oligosaccharide chains for obtaining enoxaparin sodium. The retentate solution is lyophilized to obtain dry enoxaparin sodium.

### Example 6

The product obtained in the previous example was analysed to determine its anti-FXa and anti-Flla activity. The results obtained were as follows:

| **Anti-FXa activity, IU/mg (dried substance)** | **Anti-Flla activity, IU/ mg (dried substance)** | **Ratio aFXa/a FIIa** |
|---|---|---|
| 104 | 26.8 | 3.9 |

In view of the preceding description and the examples, a person skilled in the art would arrive at the invention as claimed without needing to resort to undue experimentation. The above will be better understood with reference to the preceding examples, which describe certain processes for the preparation of embodiments of the present invention. All the references made to these examples are for illustration purposes only. The examples must not be considered limiting, and are only illustrations of some of the many possible embodiments considered by the present invention.

As used in the present document, the term "approximately" means ± 10%, ± 5% or ± 1% of the specified value, preferably ± 10%. Moreover, all the ranges specified in the present document include the limits of the range and all the whole and fractional values, particularly according to the definition of the term "approximately".

## Claims

1. Method for obtaining low molecular weight heparins (LMWH) with an average molecular weight distribution of between approximately 3.0 and approximately 5.0 kDa comprising the following steps:
a) providing a crude depolymerized heparin solution with an oligosaccharide chain distribution range of between approximately 0.6 and approximately 10 kDa and a heparin concentration of up to approximately 4% w/v;
b) performing at least one concentration step by aqueous phase tangential flow filtration (TFF) using a nominal cut-off 1 kDa membrane to achieve a heparin concentration of up to approximately 25% w/v, thereby obtaining said LMWH.

2. Method according to claim 1, wherein step (b) is performed a first concentration step by TFF to achieve a heparin concentration of up to approximately 10% w/v and a second concentration step by TFF to achieve a heparin concentration of between approximately 10% and approximately 25% w/v.

3. Method according to claim 2, wherein the second concentration step is performed to a heparin concentration of between approximately 12% and approximately 22% w/v.

4. Method according to any one of claims 1 to 3, wherein a step of clarifying the heparin solution of step (a) is performed.

5. Method according to any one of claims 1 to 4, wherein at least one depth filtration step is performed.

6. Method according to claim 5, wherein the depth filtration step is performed prior to the TFF concentration step if only one is performed, or prior to the first TFF concentration step if more than one TFF concentration step is performed.

7. Method according to claim 6, wherein the depth filtration step is performed subsequently to the TFF concentration step if only one is performed, or prior to the first TFF concentration step if more than one TFF concentration step is performed.

8. Method according to any one of claims 1 to 7, wherein at least one step of diafiltration with water is performed.

9. Method for obtaining heparins according to claim 8, wherein the diafiltration step is performed prior to the TFF concentration step if only one is performed, or prior to the first TFF concentration step if more than one TFF concentration step is performed.

10. Method according to any one of claims 1 to 9, comprising at least one step of treating with H₂O₂.

11. Method according to claim 10, wherein the H₂O₂ treatment step is performed subsequently to the TFF concentration step if only one is performed, or prior to the first TFF concentration step if more than one TFF concentration step is performed.

12. Method according to claim 10, wherein the H₂O₂ treatment step is performed prior to the TFF concentration step if only one is performed, or prior to the first TFF concentration step if more than one TFF concentration step is performed.

13. Method according to any one of claims 1 to 12, wherein a step of lyophilizing the obtained concentrate is performed.

14. Method according to any one of claims 1 to 13, wherein the crude depolymerized heparin has not been obtained by fractional precipitation.

15. Method according to any one of claims 1 to 14, wherein the entire method excludes fractional precipitation of the heparin.

16. Method according to any one of claims 1 to 15, wherein the molecular weight (Mw) of the LMWH obtained is in the following ranges
| | | | | |
|---|---|---|---|---|
| | Mw, Da | M1 <2000 Da, % | M2 2000-8000 Da, % | M3 >8000 Da, % |
| LMWH | 3800-5000 | 12.0-20.0 | 68.0-82.0 | ≤18.0. |

17. Method according to any one of claims 1 to 16, wherein the molecular weight (Mw) of the crude depolymerized heparin is in the following ranges
| | | | | |
|---|---|---|---|---|
| | Mw, Da | M1 <2000 Da, % | M2 2000-8000 Da, % | M3 >8000 Da, % |
| crude depolymerized heparin | 3000-5000 | ≤25 | 60-80 | ≤20. |

18. Method according to any one of claims 1 to 15, wherein the molecular weight (Mw) of the LMWH obtained is in the following ranges
| | | | | |
|---|---|---|---|---|
| | Mw, Da | M1 <2000 Da, % | M2 2000-6000 Da, % | M3 >6000 Da, % |
| LMWH | 3000-4200 | <35.0 | 50.0-75.0 | <15.0. |

19. Method according to any one of claims 1 to 15 or 18, wherein the molecular weight (Mw) of the crude depolymerized heparin is in the following ranges
| | | | | |
|---|---|---|---|---|
| | Mw, Da | M1 <2000 Da, % | M2 2000-6000 Da, % | M3 >6000 Da, % |
| crude depolymerized heparin | 2500-5000 | <40 | 50-75 | <25. |

20. Method according to any one of claims 1 to 19, wherein the concentration by tangential flow filtration (TFF) employs a 0.7 to 1 kDa membrane.

21. Method according to claim 20, wherein a 0.9 to 1 kDa, preferably 1 kDa, is employed.

22. Method according to any one of claims 1 to 21, wherein the heparin is enoxaparin sodium.
